# EUROPEAN PATENT APPLICATION

(11) **EP 4 122 680 A1**
(43) Date of publication of application: **25.01.2023**
(21) Application number: 22178649.4
(22) Date of filing: 13.06.2022
(51) Int. Cl.: B29C 65/34, B29C 65/48, B29C 65/50, B29K 101/12, B29K 105/06

(54) **WELDING DEVICE AND WELDING METHOD**

(30) Priority: 19.07.2021 JP 2021118781
(71) Applicant: Mitsubishi Heavy Industries, Ltd., Tokyo 100-8332 (JP)
(72) Inventor: TERASAKA, Akihiro, Chiyoda-ku, Tokyo, 100-8332 (JP); OTOBE, Shogo, Chiyoda-ku, Tokyo, 100-8332 (JP)
(74) Representative: Hoffmann Eitle

(57) **Abstract**

Provided are a welding device and a welding method that can avoid occurrence of a clearance in a side region of a member and suppress occurrence of a failure of the member due to such a clearance. The embodiment includes: an electrode 11 configured to supply electricity to an electroconductive element 23 arranged between members 21, 22 and configured to generate heat by current conduction; and a pressing element 12 arranged in a side region of one member 22 of the members 21, 22 and configured to press the electroconductive element 23 while elastically being in close contact with the one member 22. Further, the pressing element 12 comes into close contact with the one member 22 by being pushed against the electroconductive element 23 and expanding in a direction orthogonal to a pushing direction.

## Description

### BACKGROUND

### 1. TECHNICAL FIELD

The present disclosure relates to a welding device and a welding method.

### 2. DESCRIPTION OF RELATED ART

As a method for joining members together that are thermoplastic composite materials, there is a method of arranging an electroconductive material between the members, conducting current through the electroconductive material to generate heat, and thereby melting thermoplastic resin to weld the members to each other (for example, U.S. Patent Application Publication No. 2020/0055259).

U.S. Patent Application Publication No. 2020/0055295 is an example of the related art.

Although an electrode and each member are adjacent to each other in the configuration disclosed in U.S. Patent Application Publication No. 2020/0055295, there are tolerances in such electrodes and members, and when the electrode is formed of a rigid body, a clearance due to such tolerances may inevitably occur in a side region of the member (between the electrode and the member).

If such a clearance occurs, there is a concern about waviness or squeeze-out of fibers contained in the member or occurrence of voids inside the member, for example.

### BRIEF SUMMARY

The present disclosure has been made in view of such circumstances, and an object is to provide a welding device and a welding method that can avoid occurrence of a clearance in a side region of a member and suppress occurrence of a failure of the member due to the clearance.

To achieve the above object, the welding device and the welding method of the present disclosure employ the following solutions.

That is, a welding device according to one aspect of the present disclosure includes: an electrode configured to supply electricity to an electroconductive element arranged between members and configured to generate heat by current conduction; and a pressing element arranged in a side region of one member of the members and configured to press the electroconductive element while elastically being in close contact with the one member.

Further, a welding method according to one aspect of the present disclosure is a welding method using a welding device, the welding device includes an electrode configured to supply electricity to an electroconductive element arranged between members and configured to generate heat by current conduction and a pressing element arranged in a side region of one member of the members and configured to press the electroconductive element while elastically being in close contact with the one member, and the welding method includes: pushing the pressing element against the electroconductive element.

According to the present disclosure, it is possible to avoid occurrence of a clearance in a side region of a member and suppress occurrence of a failure of the member due to such a clearance.

### BRIEF DESCRIPTION OF THE SEVERAL VIEWS OF THE DRAWINGS

Fig. 1 is a diagram illustrating a welding device according to a first embodiment of the present disclosure (before welding).
Fig. 2 is a diagram illustrating the welding device according to the first embodiment of the present disclosure (during welding).
Fig. 3 is a diagram illustrating a view of deformation of a pressing element (electroconductive pressing element).
Fig. 4 is a diagram illustrating a welding device according to a second embodiment of the present disclosure (before welding).
Fig. 5 is a diagram illustrating the welding device according to the second embodiment of the present disclosure (during welding).

### DETAILED DESCRIPTION

### [First Embodiment]

A welding device and a welding method according to a first embodiment of the present disclosure will be described below with reference to the drawings.

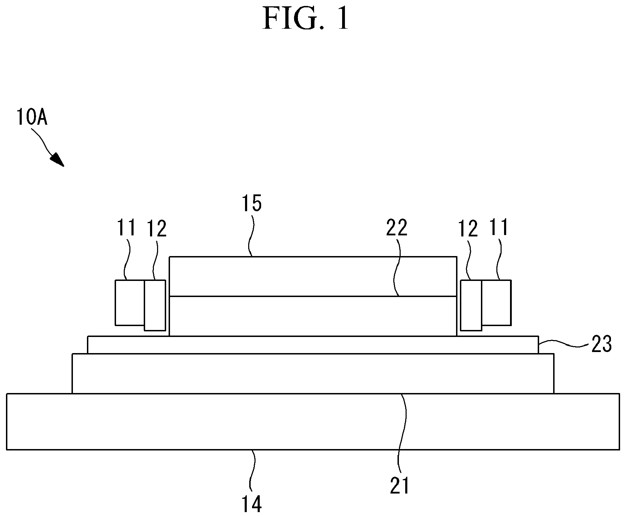

As illustrated in Fig. 1, a welding device 10A is a device that arranges a first member 21 and a second member 22 (one member) between a first pressure plate 14 and a second pressure plate 15, conducts current through an electroconductive element 23 interposed between the first member 21 and the second member 22 to cause the electroconductive element 23 to generate heat by using electrodes 11, and thereby welds the first member 21 and the second member 22 to each other.

Each of the first member 21 and the second member 22 is a fiber reinforced resin (for example, CFRP or GFRP) containing a thermoplastic resin.

The electroconductive element 23 is a sheet-like resistance body that generates heat by current conduction, and examples thereof may be a copper mesh, a CFRTP prepreg, and the like.

The detailed configuration of the welding device 10A will be described below.

The welding device 10A includes the electrodes 11, the pressing elements 12, the first pressure plate 14, and the second pressure plate 15.

The first pressure plate 14 and the second pressure plate 15 are members that can interpose and press the first member 21, the second member 22, and the electroconductive element 23.

The first pressure plate 14 is located in the lower part of the welding device 10A, and the second pressure plate 15 is located in the upper part of the welding device 10A.

Each of the first pressure plate 14 and the second pressure plate 15 is made of a steel material or ceramics, for example.

The first member 21, the electroconductive element 23, and the second member 22 are placed in this order from the lower side on the top surface of the first pressure plate 14. The second member 22 located uppermost out of the first member 21, the electroconductive element 23, and the second member 22 is in contact with the bottom surface of the second pressure plate 15.

Each electrode 11 is a device for conducting current through the electroconductive element 23 and is supplied with electric power from a power supply (not illustrated). The electrodes 11 are in contact with the electroconductive element 23 during welding.

The electrodes 11 are arranged in regions on the sides of the second member 22 (in the case of Fig. 1, on the left and right of the second member 22) and above the electroconductive element 23. Each electrode 11 is arranged with a clearance being provided between the second member 22 and the electrode 11.

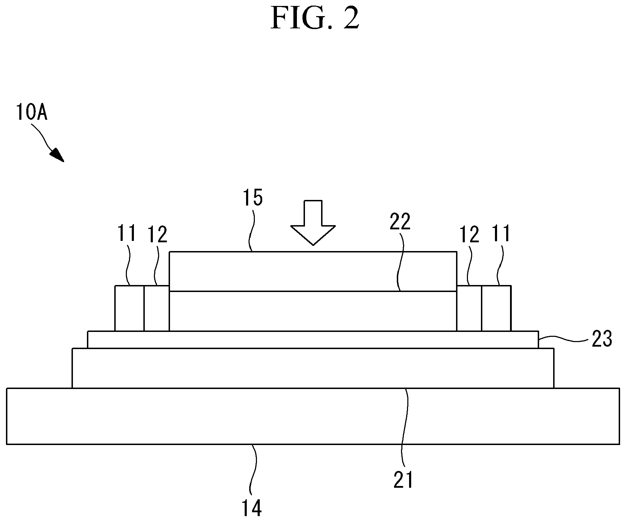

Each of the pressing elements 12 is a member having elasticity and heat resistance (for example, a heat-resistant rubber). The pressing element 12 is in close contact with the side surface of the second member 22 during welding. The details thereof will be described in illustration for Fig. 2 (the welding device 10A during welding).

The elasticity as used herein differs from elasticity of a metal and means rubber elasticity/entropy elasticity.

Further, the heat resistance as used herein means a property that can at least endure a temperature in heat generation of the electroconductive element 23, that is, means a property that can endure a temperature environment above the melting point of the thermoplastic resin.

Each pressing element 12 is arranged in a region between the second member 22 and each electrode 11. The pressing element 12 is arranged with a clearance being provided between the second member 22 and the pressing element 12.

The pressing element 12 has a longer dimension than the electrode 11 in the vertical direction (the direction in which the electrodes 11 and the pressing elements 12 are pushed against the electroconductive element 23 during welding) in an unloaded state before welding.

The welding device 10A configured as described above is used as follows.

That is, as illustrated in Fig. 1, there is a state where the first member 21, the electroconductive element 23, and the second member 22 are placed on the top surface of the first pressure plate 14 before welding.

At this time, the electrodes 11 and the pressing elements 12 are arranged in regions on the sides of the second member 22 and above the electroconductive element 23.

As illustrated in Fig. 2, the second pressure plate 15 is pushed and pressed toward the first pressure plate 14 side during welding. Further, the electrodes 11 and the pressing elements 12 are pushed against the electroconductive element 23.

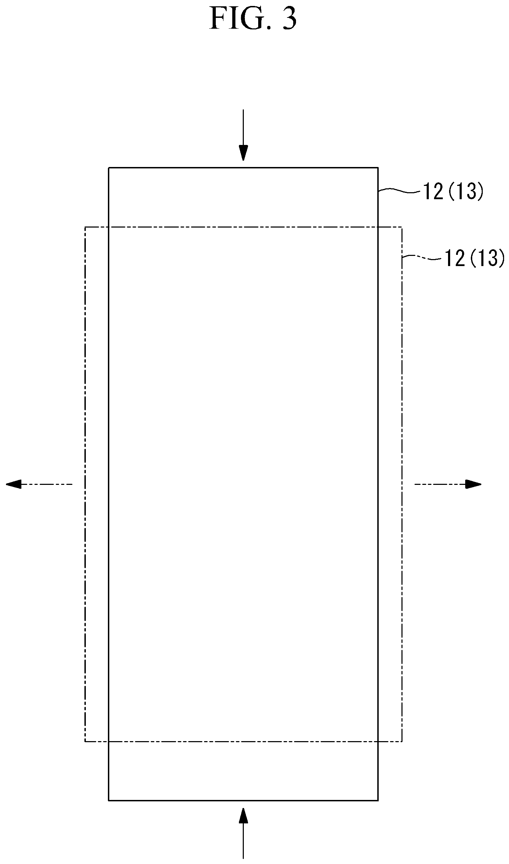

At this time, as illustrated in Fig. 3, the pressing element 12 is compressed in the vertical direction and expands in the lateral direction by the elasticity thereof. Thus, as illustrated in Fig. 2, the pressing elements 12 elastically comes into close contact with the side surfaces of the second member 22, and this completely eliminates the clearances provided between the second member 22 and the pressing elements 12.

Herein, the solid line indicated in Fig. 3 represents the shape of the pressing element 12 before deformation (unloaded state/before welding), and the two-dot-chain line represents the shape of the pressing element 12 after deformation (loaded state/during welding).

Note that, if the electrode 11, which is a rigid body, or a non-elastic member is pushed against the side surface of the second member 22, it will be difficult to completely eliminate a slight clearance due to the tolerance of each component/each member.

The electrode 11 is used to conduct current through the electroconductive element 23 to cause the electroconductive element 23 to generate heat and melt the thermoplastic resin contained in the first member 21 and the second member 22, and thereby the first member 21 and the second member 22 are welded together.

Note that, at completion of the welding, the electroconductive element 23 is incorporated in a component in which the first member 21 and the second member 22 are integrated and becomes a part of the component.

According to the present embodiment, the following advantageous effects are achieved.

Since the welding device includes the electrodes 11 and the pressing elements 12 arranged in side regions of the second member 22 and configured to press the electroconductive element 23 while elastically being in close contact with the second member 22, it is possible to press the electroconductive element 23 without causing a clearance in the side regions of the second member 22 during welding using heat generation of the electroconductive element 23. This can suppress occurrence of a failure due to such a clearance.

Examples of the failure due to a clearance may be waviness or squeeze-out of fibers contained in the first member 21 and the second member 22, occurrence of voids inside the first member 21 and the second member 22, and the like when the first member 21 and the second member 22 are thermoplastic composite materials. Waviness or squeeze-out of fibers or occurrence of voids will reduce the quality of the welded component (product).

Further, the electrodes 11 are arranged in the side regions of the second member 22, and the pressing elements 12 are separate components from the electrodes 11 and are arranged between respective electrodes 11 and the second member 22. Thus, by simply adding the pressing elements 12 to the welding device having no pressing element 12, it is possible to provide the welding device 10A that can suppress occurrence of a failure due to the clearance.

Further, since the pressing element 12 expands in the direction orthogonal to the pushing direction by being pushed against the electroconductive element 23 and thereby comes into close contact with the second member 22, close contact of the pressing element 12 with the second member 22 can be obtained by a simple method.

Note that, in the first embodiment, close contact of the second member 22 with the pressing elements 12 may be obtained by pushing the electrodes 11 toward the pressing elements 12 side.

Further, the pressing elements 12 may be elastically deformed by applying an internal pressure to the pressing elements 12.

### [Second Embodiment]

A welding device according to a second embodiment of the present disclosure will be described below with reference to the drawings.

Note that a welding device 10B of the present embodiment differs from the welding device 10A of the first embodiment in the form of the electrodes 11 and the pressing elements 12, and is the same for the remaining features. Thus, the same features as those in the welding device 10A of the first embodiment are labeled with the same references, and the description thereof will be omitted.

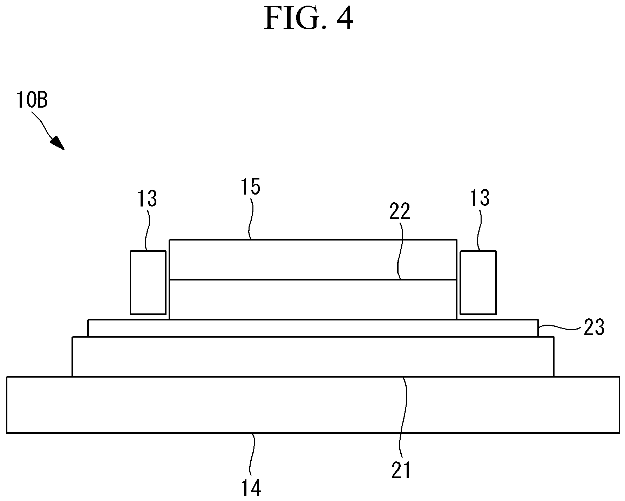

As illustrated in Fig. 4, the welding device 10B includes electroconductive pressing elements 13 instead of the electrodes 11 and the pressing elements 12 of the welding device 10A of the first embodiment.

Each electroconductive pressing element 13 has both the functions of the pressing element 12 and the electrode 11, namely, has elasticity and heat resistance and functions as an electrode.

An example of the material of the electroconductive pressing element 13 may be electroconductive polymer.

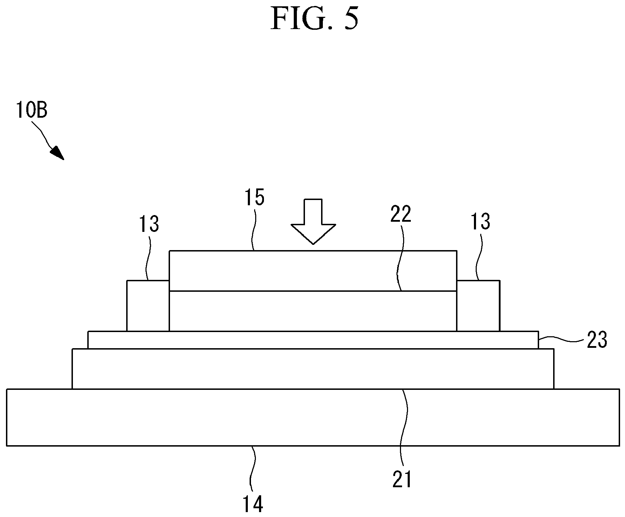

As illustrated in Fig. 3 and Fig. 5, in the same manner as the pressing element 12, the electroconductive pressing element 13 is also compressed in the vertical direction and expands in the lateral direction by being pushed against the electroconductive element 23. Thus, the electroconductive pressing element 13 elastically comes into close contact with the side surface of the second member 22, and a slight clearance provided between the second member 22 and the electroconductive pressing element 13 is completely eliminated.

According to the present embodiment, the number of components forming the welding device 10B can be reduced compared to the case where the pressing element 12 and the electrode 11 are separate components.

The welding device and the welding method according to each embodiment as described above are recognized as follows, for example.

That is, a welding device (10A, 10B) according to one embodiment of the present disclosure includes: an electrode (11) configured to supply electricity to an electroconductive element (23) arranged between members (21, 22) and configured to generate heat by current conduction; and a pressing element (12, 13) arranged in a side region of one member (22) of the members and configured to press the electroconductive element while elastically being in close contact with the one member.

According to the welding device of the present aspect, since the welding device includes an electrode configured to supply electricity to an electroconductive element arranged between the members and configured to generate heat by current conduction and a pressing element arranged in a side region of one of the members and configured to press the electroconductive element while elastically being in close contact with the one member, it is possible to press the electroconductive element without causing a clearance in the side region of the one member during welding using heat generation of the electroconductive element. This can suppress occurrence of a failure due to such a clearance.

Examples of the failure due to a clearance may be waviness or squeeze-out of fibers contained in the member, occurrence of voids inside the member, and the like when the members are thermoplastic composite materials.

Further, in the welding device according to one aspect of the present disclosure, the electrode is arranged in the side region, and the pressing element (12) is a separate component from the electrode and is arranged between the electrode and the one member.

According to the welding device of the present aspect, since the electrode is arranged in the side region, and the pressing element is a separate component from the electrode and is arranged between the electrode and the one member, it is possible to provide the welding device that can suppress occurrence of a failure due to the clearance by simply adding the pressing element to the welding device having no pressing element.

Further, in the welding device according to one aspect of the present disclosure, the pressing element (13) serves as the electrode.

According to the welding device of the present aspect, since the pressing element also serves as the electrode, the number of components forming the welding device can be reduced compared to the case where the pressing element and the electrode are separate components.

Further, in the welding device according to one aspect of the present disclosure, the pressing element comes into close contact with the one member by being pushed against the electroconductive element and expanding in a direction orthogonal to a pushing direction.

According to the welding device of the present aspect, since the pressing element comes into close contact with the one member by being pushed against the electroconductive element and expands in the direction orthogonal to the pushing direction, close contact of the pressing element with the member can be obtained by a simple method.

Further, the welding method according to one aspect of the present disclosure is a welding method using a welding device including an electrode configured to supply electricity to an electroconductive element arranged between members and configured to generate heat by current conduction and a pressing element arranged in a side region of one member of the members and configured to press the electroconductive element while elastically being in close contact with the one member, and the welding method includes pushing the pressing element against the electroconductive element.

### [List of Reference Numerals]

- 10A, 10B: welding device
- 11: electrode
- 12: pressing element
- 13: electroconductive pressing element
- 14: first pressure plate
- 15: second pressure plate
- 21: first member (member)
- 22: second member (member)
- 23: electroconductive element

## Claims

1. A welding device comprising:
an electrode configured to supply electricity to an electroconductive element arranged between members and configured to generate heat by current conduction; and
a pressing element arranged in a side region of one member of the members and configured to press the electroconductive element while elastically being in close contact with the one member.

2. The welding device according to claim 1,
wherein the electrode is arranged in the side region, and
wherein the pressing element is a separate component from the electrode and is arranged between the electrode and the one member.

3. The welding device according to claim 1, wherein the pressing element serves as the electrode.

4. The welding device according to any one of claims 1 to 3, wherein the pressing element comes into close contact with the one member by being pushed against the electroconductive element and expanding in a direction orthogonal to a pushing direction.

5. A welding method using a welding device, wherein the welding device comprises
an electrode configured to supply electricity to an electroconductive element arranged between members and configured to generate heat by current conduction, and
a pressing element arranged in a side region of one member of the members and configured to press the electroconductive element while elastically being in close contact with the one member,
the welding method comprising:
pushing the pressing element against the electroconductive element.
